# EUROPÄISCHE PATENTANMELDUNG

(11) **EP 3 219 398 A1**
(43) Veröffentlichungstag der Anmeldung: **20.09.2017**
(21) Anmeldenummer: 16160744.5
(22) Anmeldetag: 16.03.2016
(51) Int. Cl.: B05B 15/12, B01D 46/00

(54) **LACKIERANLAGE UND VERFAHREN ZUM LACKIEREN EINES WERKSTÜCKS**

(71) Anmelder: Sturm Maschinen- & Anlagenbau GmbH, 94330 Salching (DE)
(72) Erfinder: VÖLLINGER, Ralf, 94315 Straubing (DE); RATZKA, Uwe, 94339 Leiblfing (DE); HOFFMANN, Simon, 84152 Mengkofen (DE)
(74) Vertreter: Wunderlich, Rainer

(57) **Zusammenfassung**

Die Erfindung betrifft eine Lackieranlage und ein Verfahren zum Lackieren eines Werkstücks, wobei in einer Lackierstation mittels mindestens einer Lackiervorrichtung eine Beschichtung auf das Werkstück aufgesprüht wird und in einer Absaugstation, welche außerhalb der Lackierstation angeordnet ist, über eine Absaugeinrichtung mit einem Filterelement Luft mit Overspray aus der Lackierstation angesaugt wird, wobei Overspray aus der angesaugten Luft aus dem Filterelement abgeschieden wird. Gemäß der Erfindung ist vorgesehen, dass die Abluft über eine nach oben gerichtete Ansaugöffnung abgeführt wird, welche in einem unteren Bereich der Absaugstation angeordnet ist, wobei das Filterelement mittels einer Wechselvorrichtung mit Transportwagen gewechselt wird, wobei das Filterelement auf der Ansaugöffnung aufgesetzt und wieder abgeführt wird.

## Beschreibung

Die Erfindung betrifft eine Lackieranlage zum Lackieren eines Werkstücks mit einer Lackierstation, in welcher mittels mindestens einer Lackiervorrichtung eine Beschichtung auf das Werkstück aufbringbar ist, und einer Absaugstation, welche unterhalb der Lackierstation angeordnet ist, und eine Absaugeinrichtung mit einem Filterelement aufweist, über welche Luft mit Overspray aus der Lackierstation ansaugbar ist, wobei Overspray aus der angesaugten Luft an dem Filterelement abgeschieden wird, gemäß dem Oberbegriff des Anspruchs 1.

Des Weiteren betrifft die Erfindung ein Verfahren zum Lackieren eines Werkstücks, wobei in einer Lackierstation mittels mindestens einer Lackiervorrichtung eine Beschichtung auf das Werkstück aufgesprüht wird und in einer Absaugstation, welche unterhalb der Lackierstation angeordnet ist, mit einem Filterelement Luft mit Overspray aus der Lackierstation angesaugt wird, wobei Overspray aus der angesaugten Luft an dem Filterelement abgeschieden wird, gemäß dem Oberbegriff des Anspruchs 9.

Ein gattungsgemäßer Stand der Technik geht aus der DE 10 2011 108 631 A1 hervor. Bei diesem bekannten Verfahren und der bekannten Vorrichtung wird aus einer obenliegenden Lackierstation Luft mit Overspray über eine Absaugeinrichtung nach unten abgesaugt. Dabei ist in einem oberen Bereich der Absaugstation eine Ansaugöffnung vorgesehen. Über diese wird die angesaugte Luft von oben in ein kastenförmiges Filterelement eingeleitet. Die gefilterte Luft wird anschließend an einer Rückseite des kastenförmigen Filterelementes ausgeleitet. Zum Wechseln ist ein Transportwagen vorgesehen.

Aus der DE 102 09 499 A1 geht eine Anlage zum Beschichten von Gegenständen mit Pulver hervor. Bei dieser Pulverbeschichtungsanlage sind in einem unteren Bereich Filtereinheiten verfahrbar entlang von Schienen aufgehängt. Die Filtereinheiten weisen einen trommelförmigen oder quaderförmigen Abschnitt und einen darunter angeordneten trichterförmigen Abschnitt auf. Der trichterförmige Abschnitt dient zum Ansammeln abgeschiedener Pulverpartikel, welche über Leitungen zur Wiederverwendung abgeführt werden können.

Aus der DE 201 05 239 U1 geht ein Abscheidesystem für Farbpartikel in der Abluft von Lackierkabinen hervor. Zur Abscheidung von Luft sind seitlich angeordnete, auswechselbare Filterkassetten vorgesehen.

Ein Filter zum Filtern von Sprühnebeln ist aus der DE 10 2009 034 863 A1 bekannt. Der Filter weist als zur Filterung wirksames Medium ein Papiergelege auf, wobei aus dem Papiergelege Filtertaschen gebildet sind. Die Filtertaschen sind modulartig zusammengefasst.

Bei der sogenannten Trockenabscheidung von Overspray aus Lackieranlagen ist es angestrebt, möglichst viel Overspray an den wechselbaren Filterelementen abzuscheiden. Schlägt sich Overspray an den Wänden der Anlage ab, so bildet sich eine zähe, klebrige Lackschicht, welche in regelmäßigen Abständen in aufwändiger Weise zu entfernen ist. Die Filterelemente setzen sich allmählich mit Lack zu und sind teilweise mehrmals täglich zu wechseln. Die regelmäßige Wartung dieser Lackieranlagen ist mit einem großen Zeit- und Arbeitsaufwand verbunden und reduziert die Nutzungszeit der Gesamtanlage.

Der Erfindung liegt die Aufgabe zugrunde, eine Lackieranlage und ein Verfahren zum Lackieren anzugeben, welche einen besonders wirtschaftlichen Betrieb beim Lackieren ermöglichen.

Die Aufgabe wird durch eine Lackieranlage mit den Merkmalen des Anspruchs 1 beziehungsweise durch ein Verfahren mit den Merkmalen des Anspruchs 9 gelöst. Bevorzugte Ausführungsformen der Erfindung sind in den jeweils abhängigen Ansprüchen angegeben.

Die erfindungsgemäße Lackieranlage ist dadurch gekennzeichnet, dass in einem unteren Bereich der Absaugstation eine nach oben gerichtete Ansaugöffnung zum Abführen von Luft angeordnet ist, dass das Filterelement auf die Ansaugöffnung aufgesetzt ist und dass eine Wechselvorrichtung mit einem Transportwagen vorgesehen ist, mit welchem das Filterelement auf der Ansaugöffnung absetzbar ist und wieder abführbar ist.

Ein Grundgedanke der Erfindung kann darin gesehen werden, in einem unteren Bereich der Absaugstation, insbesondere am Boden der Absaugstation eine nach oben gerichtete Ansaugöffnung vorzusehen. Auf dieser nach oben gerichteten Ansaugöffnung wird das Filterelement oben auf die Ansaugöffnung aufgesetzt. Damit kann nahezu der gesamte obere Teil des Filterelementes und somit der größte Teil des Außenumfangs des Filterelementes als eine Filterfläche vorgesehen werden. Dies erlaubt ein sehr gutes Ansaugen von Luft von oben und von der Seite in einem Ansaugraum. Des Weiteren ist nach der Erfindung eine Wechselvorrichtung mit einem Transportwagen vorgesehen, mit welchem das Filterelement in einfacher Weise auf die Ansaugöffnung abgesetzt und von dieser Ansaugöffnung auch wieder abgeführt werden kann. Die Anordnung des Filterelementes in einer Schwerkraftrichtung vereinfacht die Befestigung. Vorzugsweise langt das Aufsetzen des Filterelementes, ohne dass zusätzliche Befestigungselemente benötigt werden müssten.

Insgesamt kann so ein besonders einfaches und schnelles Wechseln des Filterelementes erreicht werden. Da zum Wechseln eines Filterelementes üblicherweise der Lackierbetrieb unterbrochen werden muss, führt eine Reduzierung der Filterwechselzeit zu einer Erhöhung des Nutzungsgrades der Lackieranlage.

Nach einer bevorzugten Ausführungsform der Erfindung ist es vorgesehen, dass der Transportwagen der Wechseleinrichtung einen Anschlag aufweist, mit welchem das Filterelement zentriert über der Ansaugöffnung positionierbar und absetzbar ist. Der Anschlag kann aus einem oder mehreren Bolzen oder Plattenelementen bestehen. Vorzugsweise ist der Anschlag als ein ringsegmentförmiges Teil, insbesondere ein halbkreisförmiges Teil, ausgebildet, welches passend zu einem Außenumfang eines ringförmigen Zentrierstutzens an der Ansaugöffnung ausgebildet ist. Der Transportwagen mit einem neu einzusetzenden Filterelement kann so sehr schnell und positionsgenau an die Ansaugöffnung angefahren werden. Es ist so ein schnelles zentriertes Absetzen des Filterelementes auf der Ansaugöffnung möglich.

Eine weitere bevorzugte Ausführungsform der Erfindung besteht darin, dass der Transportwagen eine Hubeinrichtung aufweist, mittels welcher das Filterelement vertikal auf die Ansaugöffnung absenkbar und aufsetzbar sowie von der Ansaugöffnung anhebbar ist. So kann der Transportwagen zum Entfernen eines Filterelementes in einem vertikal eingefahrenen Zustand in die Absaugstation unter das Filterelement bewegt werden. Durch ein nach oben Fahren der Hubeinrichtung kann das Filterelement von der Ansaugöffnung angehoben und vertikal beabstandet werden. In diesem oben liegenden Transportzustand kann dann das Filterelement mit dem Transportwagen in effizienter Weise aus der Absaugstation ausgefahren werden. In umgekehrter Weise kann dann ein neues Filterelement mit dem vertikal ausgefahrenen Transportwagen wieder in die Absaugstation eingefahren werden. Nach Erreichen einer zentrischen Absenkposition wird die Hubeinrichtung wieder eingefahren, wobei das Filterelement auf der Ansaugöffnung zentriert abgesetzt wird.

Entsprechend ist es nach einer erfindungsgemäßen Ausführungsvariante vorgesehen, dass das Filterelement von einer Filterposition an der Ansaugöffnung mittels der Hubeinrichtung des Transportwagens in eine oben liegende Transportposition anhebbar und aus der Absaugstation abführbar ist.

Eine Zentrierung wird nach einer Weiterbildung der Erfindung noch dadurch verbessert, dass an der Ansaugöffnung ein Zentrierstutzen vorgesehen ist, auf welchem ein nach unten gerichteter Aufsatzstutzen an dem Filterelement aufsetzbar ist. Zentrierstutzen und Aufsatzstutzen sind dabei korrespondierend zueinander ausgebildet und können eine leicht konische Form aufweisen. Vorzugsweise ist der Aufsatzstutzendurchmesser größer als der Zentrierstutzen, so dass der Aufsatzstutzen den Zentrierstutzen umgibt. In der aufgesetzten Filterposition können Zentrierstutzen und Aufsatzstutzen eine leichte Presspassung bilden, so dass eine zuverlässige Befestigung erreicht ist. Im Übrigen wird die Fixierung des Filterelementes im Betrieb durch einen im Filterelement herrschenden Unterdruck unterstützt. Vorzugsweise können an dem Zentrierstutzen und dem Aufsatzstutzen radial gerichtete, vorzugsweise leicht angewinkelte Flansche oder Kragen angeordnet sein, um eine Zentrierund/oder Dichtfunktion zu verbessern.

Ein schnelles und zuverlässiges Wechseln des Filterelementes wird gemäß einer Weiterbildung der Erfindung noch dadurch unterstützt, dass das Filterelement einen Boden aufweist, der beim Transportieren des Filterelementes auf dem Transportwagen aufliegt. Dabei kann der Boden vorzugsweise aus Metall gefertigt sein, während eine oben liegende Filtereinheit als ein Einwegelement ausgebildet sein kann. An der Unterseite des Bodens kann der Aufsatzstutzen des Filterelementes angebracht sein.

Eine bevorzugte Ausführungsform der Erfindung besteht darin, dass an der Lackierstation mindestens eine Lufteintrittsöffnung vorgesehen ist, durch welche Luft zuführbar ist. Es wird somit ständig Frischluft der Lackierstation zugeführt, so dass sich eine Strömung vom Werkstück weg zur Absaugstation hin einstellt. Hierdurch werden übermäßige Lackkonzentrationen in der Kabinenluft vermieden.

Besonders bevorzugt ist es nach einer Weiterbildung der Erfindung, dass die mindestens eine Lufteintrittsöffnung oberhalb des Werkstücks angeordnet ist, wobei Luft durch die Lufteintrittsöffnung auf das Werkstück zuleitbar ist. Bevorzugt sind mehrere Lufteintrittsöffnungen vorgesehen. Es kann so eine besonders gute Umströmung des Werkstücks, welches insbesondere eine Karosserie eines Fahrzeuges sein kann, erreicht. Vorzugsweise befindet sich das Werkstück dabei mittig in der Lackierstation, vorzugsweise unmittelbar vertikal oberhalb des freistehenden Filterelementes in dem darunterliegenden Absaugraum. Es kann auch eine Einströmung von Frischluft entlang den Wänden erfolgen, was einem Lackniederschlag entgegenwirkt.

Eine weitere gute Abführung der belasteten Luft aus der Lackierstation wird nach einer Weiterbildung der Erfindung dadurch erreicht, dass die obenliegende Lackierstation von der untenliegenden Absaugstation über einen luftdurchlässigen, vorzugsweise gitterartigen, Trennboden abgeteilt ist.

Unter Umweltgesichtspunkten ist es besonders vorteilhaft, dass die mindestens eine Lufteintrittsöffnung über einen Leitungskanal mit der Ansaugöffnung verbunden ist, wobei zumindest ein Teil der gefilterten Abluft in die Lackierstation rückführbar ist. Im Verlauf des Leitungskanals kann neben einer Pump- oder Lüftungseinrichtung ein Feuchtigkeitsabscheider vorgesehen sein. Weiterhin ist es vorteilhaft, über eine Steuereinheit Frischluft teilweise der rückgeführten Luft zuzuführen und gleichzeitig einen Teil der gefilterten Abluft nach außen abzuleiten.

Das Filterelement ist dadurch gekennzeichnet, dass das Filterelement einen Boden aufweist, in welchem etwa mittig die Austrittsöffnung ausgebildet ist und dass oberhalb des Bodens die Filterfläche einen Außenumfangsbereich des Filterelementes bildet und einen Filterinnenraum umschließt, der mit der Austrittsöffnung verbunden ist. Das Filterelement ist dabei insgesamt so ausgebildet, dass weitgehend über den gesamten Außenumfang eine Einströmung von Luft in das Filterelement ermöglicht wird. Hierdurch kann eine gleichmäßige Einströmung über den Außenumfangsbereich erzielt werden. Somit kann die Filterfläche insgesamt gleichmäßig genutzt werden. Dies erhöht die Standzeit des Filterelements.

Eine bevorzugte Ausführungsform besteht darin, dass der Boden aus Metall zum Aufnahmen und Halten einer lösbaren Filtereinheit gebildet ist und dass an der Unterseite des Boden eines hülsenförmiger Aufsatzstutzen vorgesehen ist, welcher zum lösbaren Aufsetzen auf eine Ansaugöffnung einer Lackieranlage ausgebildet ist. Der Boden aus Metall mit dem Aufsatzstutzen ist somit wiederverwendbar und kann die Basis für ein Grundgerüst für das Filterelement darstellen. Auf dem Boden können auch nach oben ragende Stützen oder Fixierelemente für die Filtereinheit vorgesehen sein.

Gemäß einer bevorzugten Weiterbildung ist es vorgesehen, dass zumindest die lösbare Filtereinheit als ein Einwegelement ausgebildet ist. Dies erspart ein aufwändiges Entfernen der zähen klebrigen Lackschicht, welche sich an der Filterfläche der Filtereinheit niedergeschlagen hat. Die Filtereinheit ist dabei insgesamt aus einem kostengünstigen zweckmäßigen Material aufgebaut.

Eine weitere bevorzugte Ausführungsvariante besteht darin, dass das Filterelement und/oder die Filtereinheit einen sich nach oben vom Boden weg verjüngenden Umfangsbereich aufweisen. Dies ermöglicht ein sehr gutes Ansaugen von belasteter Luft, welche großflächig von oben anströmt. Durch diese Formgebung wird Luft mit Overspray von den Wänden der Lackieranlage effizient abgeleitet, so dass deren Verschmutzung mit Lack reduziert ist.

Besonders zweckmäßige Formgebungen bestehen darin, dass das Filterelement und/oder die Filtereinheit die Form eines Kegels, eines Kegelstumpfes, einer Halbkugel, einer glatten oder gestuften Pyramide aufweist.

Eine besonders kosteneffiziente Ausführungsvariante wird dadurch erzielt, dass zum Bilden der Filterfläche Filterzellen vorgesehen sind, welche zumindest teilweise aus einem Karton- oder Papiermaterial gebildet sind. Die Filterzellen können dabei insgesamt aus Karton- oder Papiermaterial gebildet sein oder zusätzlich luftdurchlässige Vliesmaterialien aus Textilstoffen, gitterartigen Elementen oder sonstigen geeigneten Filterelementen umfassen. Die Filterzellen bilden dabei Teilbereiche der Filtereinheit. Die einzelnen Filterzellen können dabei auswechselbar sein.

Das erfindungsgemäße Verfahren zum Lackieren eines Werkstücks ist dadurch gekennzeichnet, dass die Abluft über eine nach oben gerichtete Ansaugöffnung abgeführt wird, welche in einem unteren Bereich der Absaugstation angeordnet ist, und dass das Filterelement mittels einer Wechseleinrichtung mit Transportwagen gewechselt wird, wobei das Filterelement auf die Ansaugöffnung aufgesetzt und wieder abgeführt wird. Mit dem erfindungsgemäßen Verfahren können die zuvor beschriebenen Vorteile erzielt werden. Insbesondere ist ein schneller und effizienter Wechsel des mindestens einen Filterelementes in einer Lackieranlage möglich.

Eine bevorzugte Verfahrensvariante der Erfindung besteht darin, dass der Transportwagen einen Anschlag aufweist, mit welchem das Filterelement zentriert über der Ansaugöffnung positioniert und abgesenkt wird. Dies erlaubt insbesondere ein schnelles und positionsgenaues Einfahren des Transportwagens an die Ansaugöffnung. Der Transportwagen kann von Hand oder mittels eines Motors in den Ansaugraum der Absaugstation eingefahren werden. Das Verfahren erfolgt vorzugsweise entlang von Schienen, welche vorzugsweise verdeckt, insbesondere C-förmig ausgebildet sind.

Ein Wechseln des Filterelementes wird noch dadurch verbessert, dass das Absenken mittels einer Hubeinrichtung des Transportwagens von einer oben liegenden Transportposition auf die Ansaugöffnung erfolgt. Die Hubeinrichtung kann dabei von Hand oder motorisch oder mittels Druckluft oder einem Hydraulikfluid betätigt werden. Zur Handbetätigung kann eine Kurbel oder ein Betätigungshebel ähnlich einem Wagenheber vorgesehen sein. Für ein motorisches Betätigen kann an dem Transportwagen eine Batterie zum Antreiben eines entsprechenden Elektromotors oder ein Druckbehälter für Druckluft oder Hydraulikfluid vorgesehen sein, um entsprechende pneumatische oder hydraulische Stellzylinder zu betätigen.

Weiterhin ist es bevorzugt, dass das Filterelement von einer Filterposition an der Ansaugöffnung mittels einer Hubeinrichtung des Transportwagens in eine oben liegende Transportposition angehoben wird, in welcher der Transportwagen aus der Absaugstation verfahren wird. Ein vertikales Aufsetzen des Filterelementes auf die Ansaugöffnung erleichtert ein Zentrieren und Halten des Filterelementes in der Filterposition. Eine zusätzliche Befestigung ist nicht zwingend erforderlich, wie etwa bei einer seitlichen Anbringung des Filterelementes. In umgekehrter Weise kann ein neues Filterelement von der Transportposition auf dem Transportwagen abgesenkt und in die Filterposition an der Ansaugöffnung gebracht werden.

Ein positionsgenaues Wechseln des Filterelementes wird nach einer Weiterbildung des erfindungsgemäßen Verfahrens noch dadurch verbessert, dass der Transportwagen der Wechselvorrichtung zumindest in der Ansaugstation im Bereich der Ansaugöffnung entlang von Schienen geführt verfahren wird. Die Schienen können ausschließlich in der Absaugstation im Bereich der Ansaugöffnung vorgesehen sein, oder auch nach außerhalb der Absaugstation führen.

Besonders bevorzugt ist es dabei, dass eine Lackieranlage verwendet wird, wie sie zuvor beschrieben wurde.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Querschnittsansicht durch eine Lackieranlage nach der Erfindung;
- Fig. 2: eine perspektivische Ansicht einer Absaugstation einer erfindungsgemäßen Lackieranlage;
- Fig. 3: eine weitere perspektivische Ansicht der Lackieranlage von Fig. 2 beim Wechseln eines Filterelementes;
- Fig. 4: eine vergrößerte Detailansicht der erfindungsgemäßen Lackieranlage von Fig. 2 und Fig. 3 beim Ausfahren eines Filterelementes aus der Absaugstation;
- Fig. 5: eine perspektivische Ansicht der Lackieranlage der Figuren 2 bis 4 beim Einfahren eines neuen Filterelementes;
- Fig. 6: eine perspektivisches Ansicht eines Filterelementes von oben;
- Fig. 7: eine perspektivische Ansicht des Filterelementes von Fig. 6 von unten; und
- Fig. 8: eine perspektivische Schnittdarstellung des Filterelementes der Figuren 6 und 7.

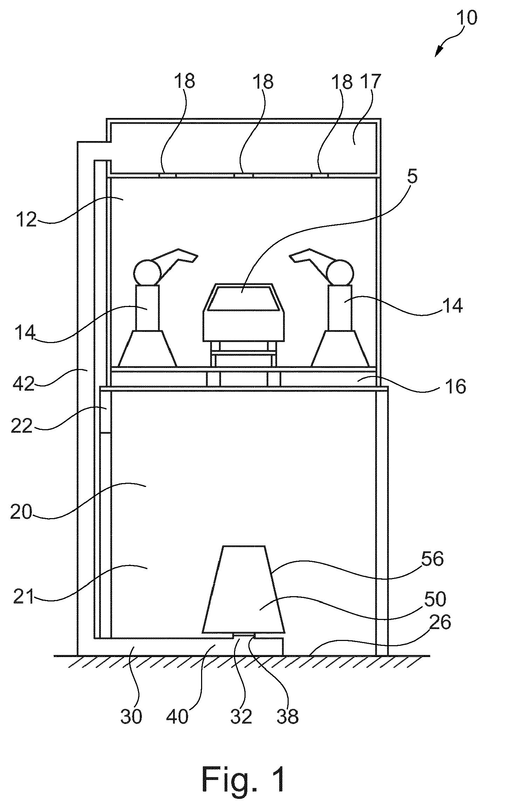

Eine erfindungsgemäße Lackieranlage 10 gemäß Fig. 1 weist eine obenliegende Lackierstation 12 und eine darunterliegende Absaugstation 20 auf, welche über einen gitterartigen, luftdurchlässigen Trennboden 16 voneinander getrennt sind. In der Lackierstation 12 wird ein Werkstück 5 mittels einer oder mehrerer Lackiervorrichtungen 14 mit einer Lackbeschichtung versehen. Im dargestellten Ausführungsbeispiel ist das Werkstück 5 eine Karosserie eines Kraftfahrzeuges, welche mittels Lackierrobotern als Lackiervorrichtungen 14 lackiert wird. Über Lufteintrittsöffnungen 18 von einem Einströmkanal 17 im Deckenbereich der Lackierstation 12 wird beständig Frischluft zugeführt. Abluft mit feinen Lackpartikeln, auch Overspray genannt, wird durch den Trennboden 16 nach unten in die Absaugstation 20 abgeleitet.

Die Absaugstation 20 weist einen Absaugraum 21 auf, welcher von Seitenwänden 22 umgrenzt ist. In einem Mittenbereich des Absaugraumes 21 ist an einem Bodenbereich 26 eine Absaugeinrichtung 30 mit einem kegelstumpfförmigen Filterelement 50 angeordnet. Das Filterelement 50 ist, wie später noch näher erläutert wird, auf einen Zentrierstutzen 38 einer Ansaugöffnung 32 aufgesetzt. Zum Bilden der Absaugeinrichtung 30 ist die Ansaugöffnung 32 mit einem Leitungskanal 40 verbunden, welcher sich entlang des Bodenbereiches 26 nach außen erstreckt. Der Leitungskanal 40 führt über eine vertikale Zuführung 42 zu dem Einströmkanal 17 im Deckenbereich der Lackierstation 12. Hierdurch kann gefilterte Luft wieder in die Lackierstation 12 zurückgeführt werden. Die Strömung wird durch eine Pumpe beziehungsweise einen Lüfter erzeugt, der nicht dargestellt ist. Weiterhin können entlang der Zuführung 42 weitere Behandlungseinrichtungen vorgesehen sein, etwa eine Einrichtung zum Entfeuchten der Luft oder eine Einrichtung zum Aufwärmen oder Kühlen oder eine Einrichtung zum Einleiten von frischer Außenluft und/oder Ableiten von Prozessluft nach außen.

Durch die Absaugeinrichtung 30 mit dem mittig angeordneten Filterelement 50, welches entlang des gesamten Umfangs von den Seitenwänden 22 beabstandet ist, und zwar mit einem Abstand von vorzugsweise 1 bis 3 Metern, wird Luft mit Overspray mittig nach unten abgesaugt, so dass ein Niederschlag von Lackpartikeln an den Seitenwänden 22 reduziert oder weitgehend vermieden wird.

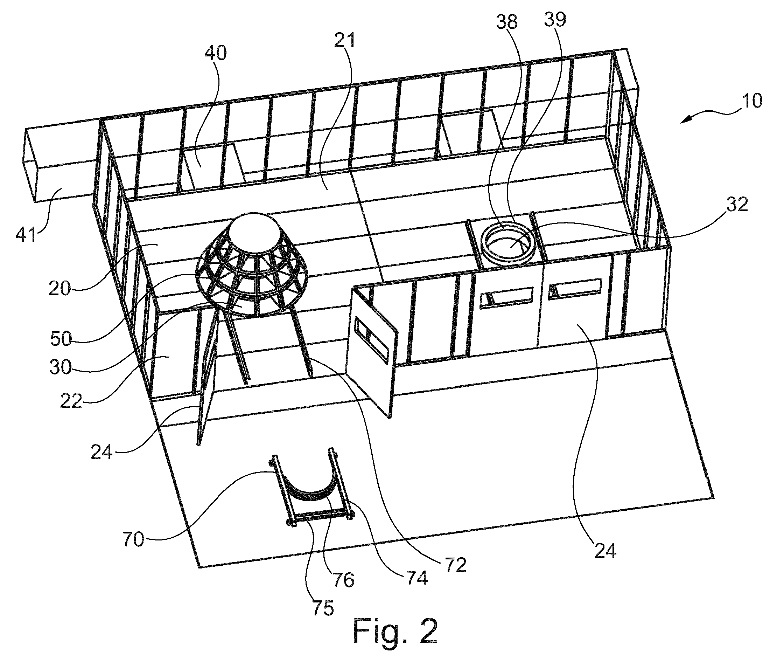

Die Lackpartikel der angesaugten Luft können sich an einer Filterfläche 56 des Filterelementes 50 absetzen. Dabei setzt sich das Filterelement 50 allmählich zu, so dass das Filterelement 50 in vorgegebenen Zeitabständen zu wechseln ist. Wie aus Fig. 2 zu sehen ist, ist die Lackieranlage 10 mit einer erfindungsgemäßen Wechselvorrichtung 70 versehen. Diese umfasst einen Transportwagen 74, welcher ein Fahrgestell 75 mit Rädern aufweist. Zum positionsgenauen Aufnehmen oder Absetzen eines Filterelements 50 weist der Transportwagen einen halbkreisförmigen Anschlag 76 auf, welcher korrespondierend zu einem hülsenförmigen Zentrierstutzen 38 mit ringförmigem Aufnahmeflansch 39 ausgebildet ist. Der Zentrierstutzen 38 ist an einer zweiten Ansaugöffnung 32 der Absaugeinrichtung 30 in dem Absaugraum 21 dargestellt, wobei in der Darstellung gemäß Fig. 2 auf diese zweite Ansaugöffnung 32 noch kein Filterelement 50 aufgesetzt ist. Die Ansaugöffnungen 32 sind jeweils über horizontal verlaufende Leitungskanäle 40 mit einem querverlaufenden Sammelkanal 41 verbunden, um eine Luftrückführung der gefilterten Luft durchzuführen.

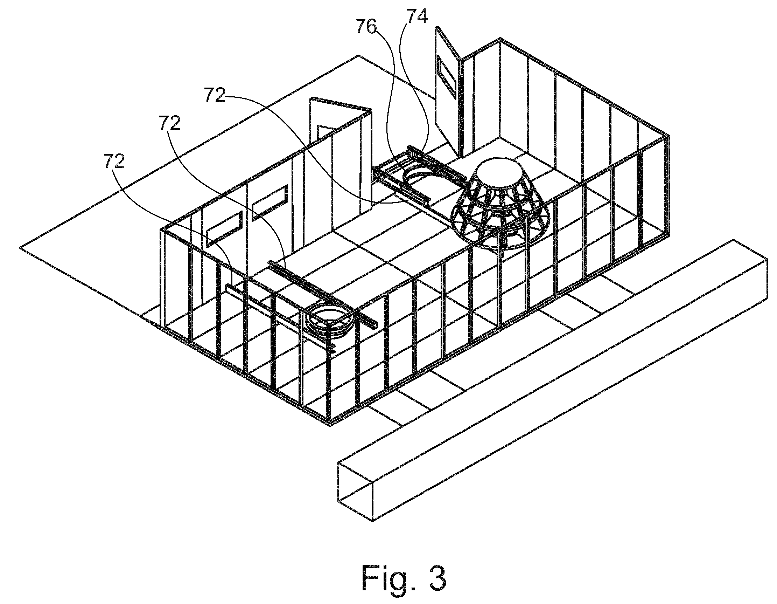

Zum Wechseln werden die zweiflügligen Tore 24, welche in den Seitenwänden 20 vorgesehen sind, geöffnet. Sodann kann gemäß Fig. 3 der Transportwagen 74 in den Absaugraum 21 entlang von zwei parallel angeordneten, C-förmigen Schienen 72 eingefahren werden, wie anschaulich in Fig. 3 dargestellt ist. Das Einschieben kann von Hand oder automatisiert erfolgen. Die Schienen 72 können auch noch außerhalb der Absaugstation 20 weitergeführt sein. Der Transportwagen 74 wird zu dem Filterelement 50 eingefahren, bis der halbringförmige Anschlag 76 an dem Zentrierstutzen 38 anliegt. Anschließend kann ein oberes Aufnahmeteil 80 des Fahrgestells 75 des Transportwagens 74 mittels einer Hubeinrichtung 78 angehoben werden. Der Aufnahmeteil 80 des Fahrgestells 75 ist dabei über vertikale Teleskopstreben 79 mit dem unteren Fahrgestell 75 höhenverstellbar verbunden. Die Hubeinrichtung 78 kann mit einem Kniehebelmechanismus ähnlich einem Wagenheber ausgebildet sein. Die Hubeinrichtung 78 kann von Hand oder pneumatisch oder hydraulisch mit Stellzylindern betätigt werden.

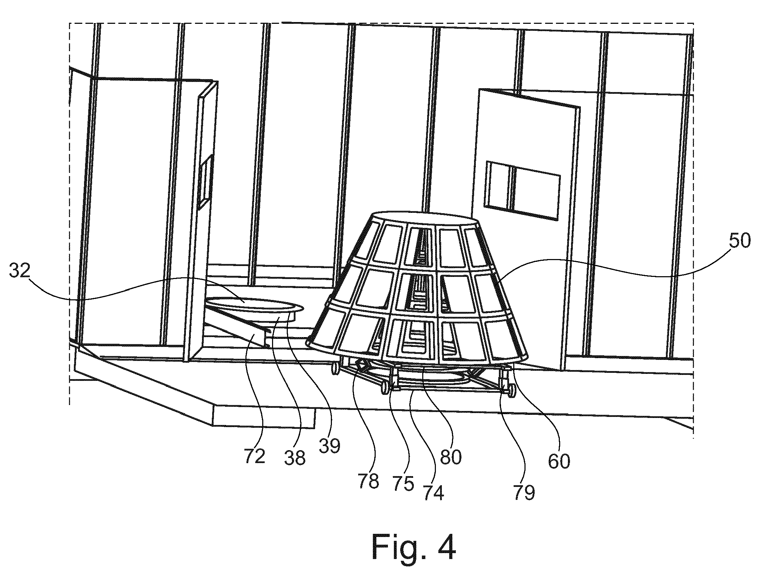

Mittels der Hubeinrichtung 78 gelangt der Aufnahmeteil 80 des Fahrgestells 75 mit einem plattenförmigen Boden 60 des Filterelementes 50 in Kontakt, wobei das Filterelement 50 insgesamt von einem Aufnahmeflansch 39 am Zentrierstutzen 38 der Ansaugöffnung 32 abgehoben wird. In dieser angehobenen Transportposition kann nun das Filterelement 50 mit dem Transportwagen 74 nach außen ausgeschoben werden, wie anschaulich in Fig. 4 dargestellt ist. Dies kann motorisch oder von Hand erfolgen.

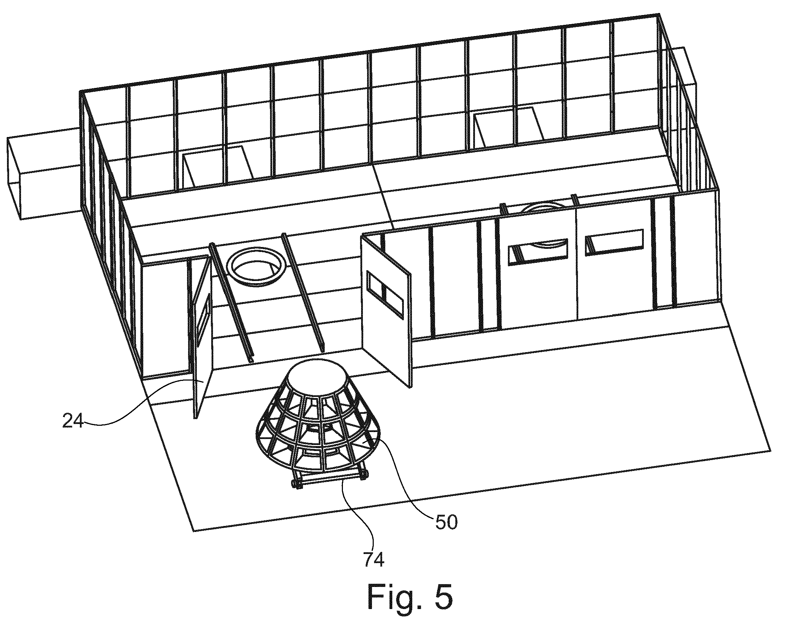

Mit dem Transportwagen 74 kann das verbrauchte Filterelement 50 zur Entsorgung abgefahren werden. Gleichzeitig kann ein neues Filterelement 50 über denselben oder einen anderen Transportwagen 74 in die Absaugstation 20 eingeschoben werden, wie anschaulich in Fig. 5 dargestellt ist. Durch den halbkreisförmigen Anschlag 76 am Transportwagen 74 kann das neue Filterelement 50 am Transportwagen 74 zentriert und beim Einschieben auch zentriert zu der Absaugöffnung 32 angeordnet und aufgesetzt werden. Abschließend kann das Tor 24 wieder geschlossen werden, so dass der Betrieb der Lackieranlage 10 fortgesetzt werden kann. Es wird so ein schneller, unkomplizierter Wechsel des Filterelementes 50 ermöglicht.

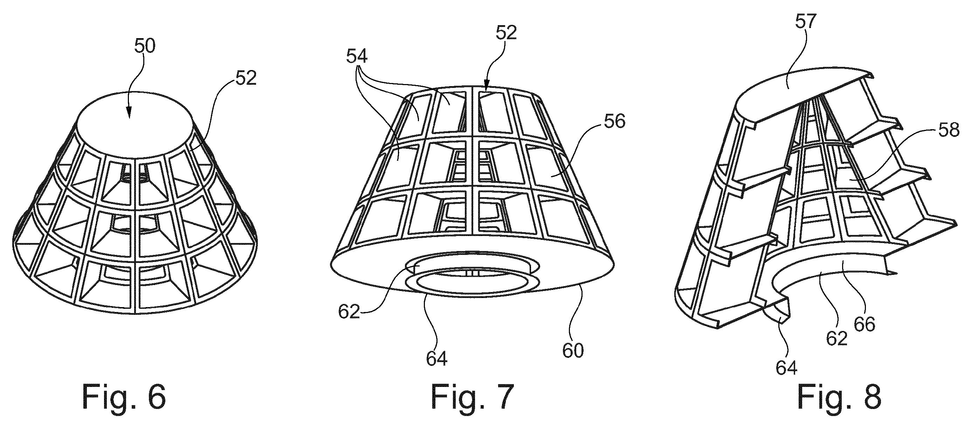

Der Aufbau eines erfindungsgemäßen Filterelementes 50 ist anschaulich in den Figuren 6 bis 8 verdeutlich. Das Filterelement 50 weist einen metallischen, ringscheibenförmigen Boden 60 auf, an dessen Unterseite ein hülsenförmiger Aufsatzstutzen 62 angeordnet ist. An dessen unterem Rand ist ein ringscheibenförmiger Dichtkragen 64 angeordnet, welcher leicht konisch, nach oben verjüngt, ausgebildet ist. Der konische Dichtkragen 64 korrespondiert mit einem entsprechend konisch ausgebildeten Aufnahmeflansch 39 am Zentrierstutzen 38 der Lackieranlage 10, so dass eine Zentrierung des Filterelementes 50 auf dem Zentrierstutzen 38 erleichtert ist.

Auf dem metallischen Boden 60 ist eine kegelstumpfförmige Filtereinheit 52 angeordnet, welche als ein Einwegelement ausgebildet ist. Die Filtereinheit 52 ist aus einzelnen kassettenartigen Filterzellen 54 aufgebaut, deren Grundrahmen vorzugsweise aus Karton gebildet ist. Innerhalb der Filterzellen 52 ist zum Bilden der Filterfläche 56 ein geeignetes Filtermaterial, etwa Papier, ein Textil etc. oder eine Kombination verschiedener Materialien angeordnet. Durch den konischen Außenumfangsbereich des Filterelements 50 wird Luft sowohl von oben als auch von der Seite angesaugt, so dass Luft mit Lackoverspray besonders gut angesaugt und damit entfernt von den umgebenden Seitenwänden 22 einer Absaugstation 20 gehalten werden kann.

Die Filterzellen 52 umgeben einen kegelartigen Filterinnenraum 58, von welchem die gefilterte Luft nach unten über die Austrittsöffnung 66 durch die Absaugeinrichtung 30 abgeführt werden kann. Eine Oberseite des kegelstumpfförmigen Filterelementes 50 ist mit einer Abdeckplatte 57 versehen, welche vorzugsweise aus Karton gebildet sein kann.

## Patentansprüche

1. Lackieranlage zum Lackieren eines Werkstücks (5) mit
- einer Lackierstation (12), in welcher mittels mindestens einer Lackiervorrichtung (14) eine Beschichtung auf das Werkstück (5) aufsprühbar ist, und
- einer Absaugstation (20), welche unterhalb der Lackierstation (12) angeordnet ist und eine Absaugeinrichtung (30) mit einem Filterelement (50) aufweist, über welche Luft mit Overspray aus der Lackierstation (12) ansaugbar ist, wobei Overspray aus der angesaugten Luft an dem Filterelement (50) abgeschieden wird,
**dadurch gekennzeichnet,**
- **dass** in einem unteren Bereich der Absaugstation (20) eine nach oben gerichtete Ansaugöffnung (32) zum Abführen von Abluft angeordnet ist,
- **dass** das Filterelement (50) auf die Ansaugöffnung (32) aufgesetzt ist und
- **dass** eine Wechselvorrichtung (70) mit einem Transportwagen (74) vorgesehen ist, mit welchem das Filterelement (50) auf der Ansaugöffnung (32) absetzbar ist und wieder abführbar ist.

2. Lackieranlage nach Anspruch 1,
**dadurch gekennzeichnet,**
**dass** der Transportwagen (74) der Wechseleinrichtung (70) einen Anschlag (76) aufweist, mit welchem das Filterelement (50) zentriert über der Ansaugöffnung (32) positionierbar und absetzbar ist.

3. Lackieranlage nach Anspruch 1 oder 2,
**dadurch gekennzeichnet,**
**dass** der Transportwagen (74) eine Hubeinrichtung (78) aufweist, mittels welcher das Filterelement (50) vertikal auf die Ansaugöffnung (32) absenkbar und aufsetzbar sowie von der Ansaugöffnung (32) anhebbar ist.

4. Lackieranlage nach einem der Ansprüche 1 bis 3,
**dadurch gekennzeichnet,**
**dass** das Filterelement (50) von einer Filterposition an der Ansaugöffnung (32) mittels der Hubeinrichtung (78) des Transportwagens (74) in eine oben liegende Transportposition anhebbar und aus der Absaugstation (20) abführbar ist.

5. Lackieranlage nach einem der Ansprüche 1 bis 4,
**dadurch gekennzeichnet,**
**dass** an der Ansaugöffnung (32) ein Zentrierstutzen (38) vorgesehen ist, auf welchen ein nach unten gerichteter Aufsatzstutzen (62) an dem Filterelement (50) aufsetzbar ist.

6. Lackieranlage nach einem der Ansprüche 1 bis 5,
**dadurch gekennzeichnet,**
**dass** das Filterelement (50) einen Boden (60) aufweist, welcher beim Transportieren des Filterelements (50) auf dem Transportwagen (74) aufliegt.

7. Lackieranlage nach einem der Ansprüche 1 bis 6,
**dadurch gekennzeichnet,**
**dass** die oben liegende Lackierstation (12) von der unten liegenden Absaugstation (20) über einen luftdurchlässigen, vorzugsweise gitterartigen, Trennboden (16) abgeteilt ist.

8. Lackieranlage nach einem der Ansprüche 1 bis 7,
**dadurch gekennzeichnet,**
**dass** mindestens eine Lufteintrittsöffnung (18) in die Lackierstation (12) über einen Leitungskanal (40) mit der Ansaugöffnung (32) verbunden ist, wobei zumindest ein Teil der gefilterten Abluft in die Lackierstation (12) rückführbar ist.

9. Verfahren zum Lackieren eines Werkstücks (5), wobei
- in einer Lackierstation (12) mittels mindestens einer Lackiervorrichtung (14) eine Beschichtung auf das Werkstück (5) aufgesprüht wird und
- in einer Absaugstation (20), welche unterhalb der Lackierstation (12) angeordnet ist, über eine Absaugeinrichtung (30) mit einem Filterelement (50) Luft mit Overspray aus der Lackierstation (12) angesaugt wird, wobei Overspray aus der angesaugten Luft an dem Filterelement (56) abgeschieden wird,
**dadurch gekennzeichnet,**
- **dass** die Abluft über eine nach oben gerichtete Ansaugöffnung (32) abgeführt wird, welche in einem unteren Bereich der Absaugstation (20) angeordnet ist, und
- **dass** das Filterelement (50) mittels einer Wechseleinrichtung (70) mit Transportwagen (74) gewechselt wird, wobei das Filterelement (50) auf die Ansaugöffnung (32) aufgesetzt und wieder abgeführt wird.

10. Verfahren nach Anspruch 9,
**dadurch gekennzeichnet,**
**dass** eine Lackieranlage (10) nach einem der Ansprüche 1 bis 8 verwendet wird.

11. Verfahren nach Anspruch 9 oder 10,
**dadurch gekennzeichnet,**
**dass** der Transportwagen (74) einen Anschlag (76) aufweist, mit welchem das Filterelement (50) zentriert über der Ansaugöffnung (32) positioniert und abgesenkt wird.

12. Verfahren nach Anspruch 11,
**dadurch gekennzeichnet,**
**dass** das Absenken mittels einer Hubeinrichtung (78) des Transportwagens (74) von einer oben liegenden Transportposition auf die Ansaugöffnung (32) erfolgt.

13. Verfahren nach einem der Ansprüche 9 bis 12,
**dadurch gekennzeichnet,**
**dass** das Filterelement (50) von einer Filterposition an der Ansaugöffnung (32) mittels einer Hubeinrichtung (78) des Transportwagens (74) in eine oben liegende Transportposition angehoben wird, in welcher der Transportwagen (74) aus der Absaugstation verfahren wird.

14. Verfahren nach einem der Ansprüche 1 bis 13,
**dadurch gekennzeichnet,**
**dass** der Transportwagen (74) der Wechselvorrichtung (70) zumindest in der Absaugstation (20) im Bereich der Ansaugöffnung (32) entlang von Schienen (72) geführt verfahren wird.
